# EUROPÄISCHE PATENTSCHRIFT

(11) **EP 1 105 856 B1**
(45) Veröffentlichungstag und Bekanntmachung des Hinweises auf die Patenterteilung: **27.11.2002**
(21) Anmeldenummer: 99934485.6
(22) Anmeldetag: 12.05.1999
(51) Int. Cl.: G08G 1/09

(54) **EINRICHTUNG ZUR CODIERUNG UND ZUR DECODIERUNG VON ORTEN**
DEVICE FOR CODING AND DECODING LOCATIONS
DISPOSITIF POUR LE CODAGE ET LE DECODAGE D'EMPLACEMENTS

(30) Priorität: 04.08.1998 DE 19835051
(43) Veröffentlichungstag der Anmeldung: 13.06.2001
(73) Patentinhaber: ROBERT BOSCH GMBH, 70442 Stuttgart (DE)
(72) Erfinder: HESSING, Bernd, D-31188 Holle (DE)
(86) Internationale Anmeldenummer: DE9901433
(87) Internationale Veröffentlichungsnummer: WO00008616

(56) Entgegenhaltungen:
- EP-A- 0 261 450
- EP-A- 0 829 837
- DE-A- 3 718 996
- DE-A- 19 638 515
- US-A- 4 796 189

## Beschreibung

Die Erfindung betrifft ein Verfahren zur Codierung oder Decodierung von Orten in einem Verkehrswegenetz, zu denen Informationen von jeweils einem Sender an einen Empfänger übertragen werden.

In verkehrstelematischen Systemen tauschen Fahrzeuge über Datenfernübertragung Informationen mit Zentraleinrichtungen aus. Durch diesen Informationsaustausch können unterschiedliche Anwendungen, wie beispielsweise Notrufdienst, Verkehrsinformationsdienst, Orientierungshilfen oder dynamische Zielführungsdienste, realisiert werden. Für alle diese Dienste ist die Übertragung von Ortsinformationen notwendig. Durch Ortsinformationen können beispielsweise Positionen von Fahrzeugen, Ort und Ausdehnung von Verkehrsstörungen, Fahrtziele oder ausgewählte Zwischenpunkte einer Fahrtroute dargestellt werden.

Weiterhin sind sogenannte intermodale Mobilitätsdienste in Diskussion, mit denen unterschiedliche Verkehrsmittel, beispielsweise Autoverkehr und öffentlicher Personennahverkehr, miteinander verknüpft werden. Auch hierbei sind Ortsinformationen notwendig, beispielsweise als Schnittstelle von einem Verkehrsträger zu einem anderen.

Aus der DE 196 38 515 ist es bekannt, Verkehrsstörungen durch Koordinaten zu bestimmen und diese Koordinaten zu übertragen. Hierbei beziehen sich die Koordinaten auf die Anfangs- und Endpunkte von Verkehrsstörungen. Weiterhin lehrt diese Druckschrift, dass der Ort des Fahrzeugs bestimmt wird und aufgrund dieser Bestimmung entschieden wird, ob Verkehrsstörungen dem Fahrer des Fahrzeuges zur Kenntnis gegeben werden sollen oder nicht.

Bei dem Austausch von Ortsinformationen werden je nach Dienst im einzelnen unterschiedliche Genauigkeiten gefordert. So ist beispielsweise bei einem Notrufdienst eine höhere Genauigkeit einer Ortsangabe als für eine Verkehrsinformation erforderlich. Im Zusammenwirken zwischen einer Verkehrstelematik-Zentrale und den Fahrzeugen ist daher ein einheitliches Verständnis der Ortsinformation erforderlich. Wenn beispielsweise die zentrale Einrichtung das Hotel A als Ziel für die Fahrt eines Fahrzeuges überträgt, dann darf das Fahrzeugnavigationssystem nicht zum Hotel B führen.

Wegen der letztendlich begrenzten Kapazität der Übertragungsmittel zwischen Zentraleinrichtung und Fahrzeug ist eine effektive Codierung der Ortsinformation erforderlich. Eine Übertragung von geografischen Koordinaten allein reicht jedoch nicht aus, da sich an einer geografischen Position unterschiedliche Orte befinden können, beispielsweise bei Brücken oder Tunnel. Außerdem sind nicht alle Orte punktförmig, deshalb ist meistens zusätzlich die Angabe einer Richtung notwendig.

Zur codierten Übertragung von Orten sind sowohl im Fahrzeug als auch in der Zentraleinrichtung in Festwertspeichern Informationen enthalten, die zur Codierung und zur Decodierung dienen. Bei einem Verkehrsinformationsdienst kann beispielsweise die Übertragung eines Codes "ED73EF5" mit Hilfe eines geräteinternen Festwertspeichers zur Ausgabe des Textes "A5 von Basel nach Karlsruhe bei Anschlußstelle 58 Herbolzheim" führen. Zur Decodierung ist also das Vorhandensein des angesprochenen Ortes im Festwertspeicher erforderlich. Zu den einzelnen Orten können im Festwertspeicher noch Zusatzinformationen abgelegt sein, die zur Decodierung selbst nicht erforderlich sind und daher zwischen Zentraleinrichtung und Fahrzeug nicht eindeutig vereinbart sein müssen, beispielsweise die Ortsnamen und Straßennummern. Ein solches schlüsselbasierendes Codiersystem ist beispielsweise die Codierung von Ortsinformationen beim TMC-System nach CEN ENV 12313-3. Ein wesentliches Merkmal der darin verwendeten Ortsdatenbanken sind Verweise auf benachbarte Orte. Unter anderem wegen dieser Verweise sind die Pflege und Synchronisation dieser Ortsdatenbanken technisch anspruchsvoll. Abgesehen davon, können empfangene Informationen nur codiert werden, wenn bei der Codierung die gleiche Ortsdatenbank verwendet wurde.

Aufgabe der vorliegenden Erfindung ist es, ein Verfahren zur Codierung von Orten anzugeben, die eine Decodierung der Ortsinformation im Empfänger auch bei unterschiedlichen Codier- und Decodiertabellen erlaubt und somit für mehrere der obengenannten Dienste angewendet werden kann.

Diese Aufgabe wird durch die Merkmale des Anspruchs 1 gelöst.

Vorzugsweise ist bei der erfindungsgemäßen Einrichtung vorgesehen, daß der Vereinbarungsteil ferner Angaben zur Art der Codierung und zu Toleranzen der Koordinatenpaare enthält.

Als Verkehrswegenetze kommen Straßennetze, Liniennetze von Verkehrsmitteln (Bahn, Bus, Flugzeug), Schienennetze und Wasserstraßennetze in Frage, also letztlich alle Netze, bei denen durch geografische Koordinaten beschreibbare Orte in Beziehung zueinander stehen. Dabei können mit der erfindungsgemäßen Codierung auch Orte angesprochen werden, die verschiedenen Verkehrswegenetzen angehören.

Als Anwendung kann beispielsweise genannt werden, einen Nutzer an einem Samstagvormittag auf schnellstem Weg in eine Fußgängerzone zu leiten, wobei es sein kann, daß hierzu die Verkehrsmittel Bus und Bahn in die Optimierung miteinbezogen werden. Als zu codierende Orte kommen außer festgelegten Punkten im Straßennetz, beispielsweise Ortschaften oder Kreuzungen, auch andere Ortstypen in Frage, wie eine Verkehrsstörung im Straßennetz oder eine Haltestelle an einer Straßenbahnlinie.

Die Erfindung hat außerdem den Vorteil, daß trotz begrenzter Genauigkeit der übertragenen Koordinaten ein exakt definierter Ort codiert werden kann. Es wird nicht davon ausgegangen, daß die Ortsdatenbanken beim Sender und beim Empfänger identisch strukturiert sind. Es ist lediglich eine Zuordnung zu den Inhalten über die Angabe der geografischen Koordinaten erforderlich.

Ausreichend zur Decodierung ist eine hinreichende Ähnlichkeit der durch das schrittweise Vorgehen definierten Straßenelemente. Dabei muß die Detaillierungstiefe im Empfänger mindestens der Detaillierungstiefe der Ortsdatenbank des Senders entsprechen. Außerdem müssen die beim Sender bei der Auswahl der Punkte angenommenen Beziehungen zwischen den Punkten für den Empfänger nachvollziehbar sein. Beispielsweise können alle Punkte an einer Straße liegen. In diesem Fall müssen im Empfänger und im Sender diese Straße und die auf ihr liegenden Punkte bekannt sein. Die einzelnen Schritte bei der erfindungsgemäßen Einrichtung bilden ein Mannöver, das aufgrund einer Wegbeschreibung erfolgt, die ein nach dem Weg Befragter einem Fremden gibt.

Bei Verwendung von geografischen Koordinaten ist eine Vereinbarung der anzuwendenden Codierung erforderlich. Dabei kann die Vereinbarung explizit oder implizit erfolgen. Es ist auch möglich, jeder durch ein Mannöver beschriebenen Ortsinformation eine Information über die verwendete Codierung vorauszuschicken. Dazu kann im einzelnen vorgesehen sein, daß der Vereinbarungsteil mindestens teilweise dauerhaft im Sender und im Empfänger gespeichert ist. Ein solcher Vereinbarungsteil kann beispielsweise in einer für alle Sender und Empfänger gültigen Norm festgelegt sein.

Eine weitere Möglichkeit besteht darin, daß der Vereinbarungsteil mindestens teilweise bei der Aufnahme einer Kommunikation zwischen Sender und Empfänger übertragen wird. Schließlich kann auch vorgesehen sein, daß der Vereinbarungsteil mindestens teilweise unmittelbar im Zusammenhang mit dem Koordinatenteil übertragen und im Empfänger vorübergehend gespeichert wird. Hiermit können von Ortscodierung zu Ortscodierung verschiedene Vereinbarungen vorgesehen sein, die an die jeweiligen Verhältnisse angepaßt sind.

Durch die in weiteren Unteransprüchen aufgeführten Maßnahmen sind weitere vorteilhafte Weiterbildungen und Verbesserungen der im Hauptanspruch angegebenen Erfindung möglich.

Ein vorteilhaftes Verfahren zur Decodierung besteht darin, daß in einer Ortsdatenbank, welche die Koordinaten, die Lage an jeweils einem Verkehrsweg und weitere Informationen von Orten enthält, Orte ermittelt werden, die innerhalb der Toleranzbereiche der empfangenen Koordinatenpaare liegen, daß aus den ermittelten Orten diejenigen ausgewählt werden, die an einem gemeinsamen Verkehrsweg liegen, und daß aus den ausgewählten Orten derjenige als decodiert bestimmt wird, der in dem Toleranzbereich des bestimmten Koordinatenpaares liegt.

Ausführungsbeispiele der Erfindung sind in der Zeichnung anhand mehrerer Figuren dargestellt und in der nachfolgenden Beschreibung näher erläutert. Es zeigt:
- Fig. 1: einen Teil eines Straßennetzes mit verschiedenen Orten und einem Toleranzbereich eines mit der erfindungsgemäßen Einrichtung als Koordinatenpaar übertragenen Punktes,
- Fig. 2: den geleichen Teil des Straßennetzes ohne diesen Punkt,
- Fig. 3: den gleichen Teil des Straßennetzes mit weiteren Toleranzbereichen,
- Fig. 4: ein Blockschaltbild eines Telematiksystems,
- Fig. 5: und Fig. 6 je einen Ausschnitt aus einer digitalen Straßenkarte zur weiteren Erläuterung der Erfindung und
- Fig. 7: ein Ablaufdiagramm zur Erläuterung der Codierung und der Decodierung.

Gleiche Teile sind in den Figuren mit gleichen Bezugszeichen versehen.

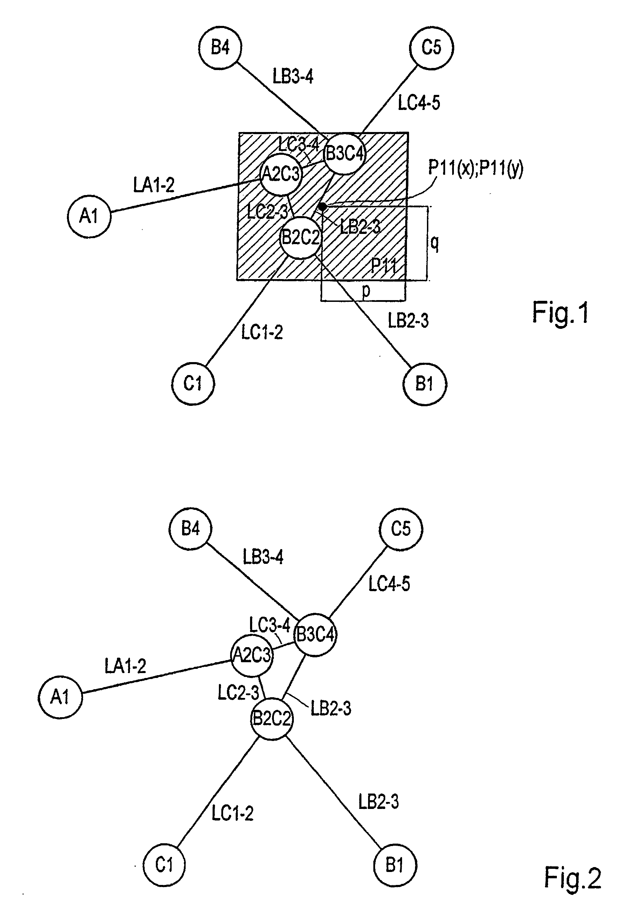

Zur Codierung und Decodierung wird eine digitale Straßenkarte verwendet, die als fiktives Beispiel in Fig. 2 dargestellt ist. Zur Übertragung einer Information, die sich beispielsweise auf Punkt A2C3 auf der Straße C in Fahrtrichtung C5 bezieht, soll dieser Punkt codiert werden. Dabei wird für die Übertragung von einer Koordinatenangabe mit relativ großen Toleranzen ausgegangen. Außer der Straße C, die von C1 über die Punkte B2C2, A2C3 und B3C4 zum Punkt C5 verläuft, zeigt Fig. 2 noch zwei weitere Straßen, nämlich eine Straße A zwischen den Orten A1 und A2C3 und eine Straße B zwischen den Orten B1, B2C2, B3C4 und B4. Die Abschnitte zwischen den Straßen sind mit einem vorangestellten L und der Indizierung der jeweils verbundenen Orte gekennzeichnet.

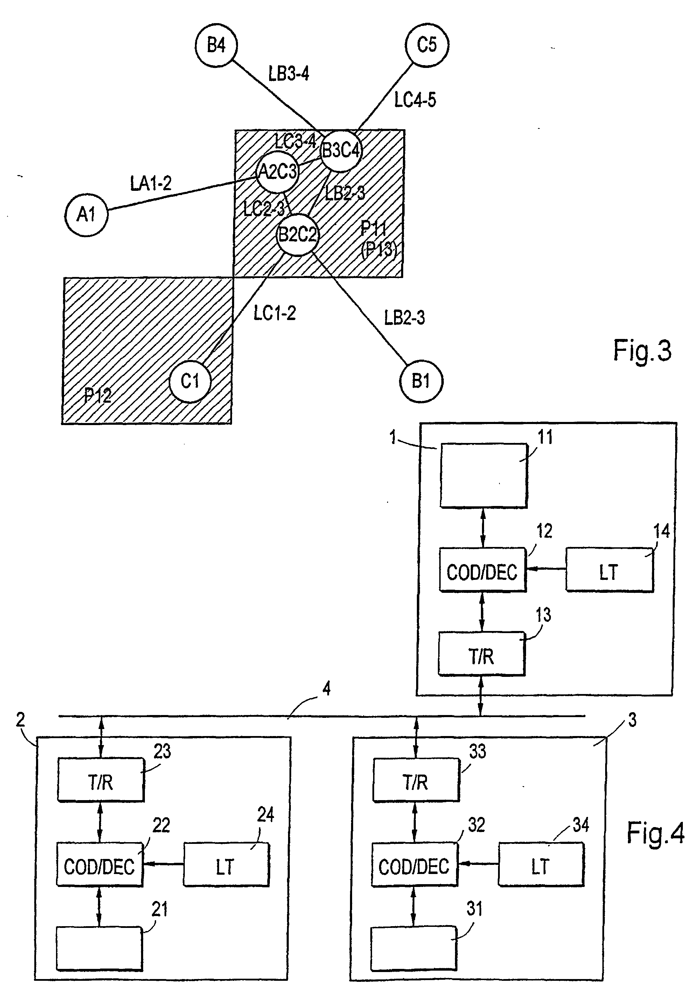

Fig. 1 zeigt zusätzlich zu dem Straßennetz nach Fig. 2 den Toleranzbereich eines Punktes P11 mit den Koordinaten P11(x); P11(y). Durch diese Codierung allein ist somit festgelegt, welcher der in dem schraffierten Toleranzbereich liegenden Orte codiert ist. Deshalb wird gemäß Fig. 3 ein Hilfspunkt P12 codiert, wobei zu dessen Positionierung die Koordinaten des Ortes C1 verwendet werden. An sich ist auch die Verwendung anderer Orte, die auf der Straße C liegen, möglich.

Dadurch wäre zunächst der Ort B2C2 codiert, für dessen Codierung man jedoch identische Koordinaten wie bei der Codierung des Ortes A2C3 erhält. Deshalb wird nun ein Hilfspunkt P13 eingefügt, der identische Koordinaten mit dem Punkt P11 aufweist. Damit ist dann der Ort A2C3 eindeutig codiert. Insgesamt enthält die Codierung des Ortes A2C3 folgende Informationen:
Vereinbarung:
   I. Einheit: x, y
   II. Toleranz: plus/minus p, q
   III. Typ: Punkt, Straßennetz
   IV. Lage: Dritter Punkt
   V. Anzahl Koordinatenpaare: drei
Koordinaten:
   I. P12(x); P12(y)
   II. P13(x); P13(y)
   III. P11(x); P11(y)

Im Falle einer digitalen Karte im Empfänger, in welcher die Orte A2C3, B2C3 und B3C4 als ein Ort (A2BnCn) codiert sind, wird bei der Übertragung der drei Punkte P12, P13 und P11 kein eindeutiges Ergebnis erzielt werden. Der Grund dafür ist, daß mehr Punkte übertragen wurden, als eindeutig im Empfänger identifizierbar sind. Eine Auswertung dieser übertragenen Codierung ist daher nicht möglich bzw. könnte je nach Ausgestaltung des Empfängers im einzelnen dem Benutzer den Punkt A2BnCn angeben in Verbindung mit einer Meldung, daß die empfangenen Informationen nicht vollständig auswertbar sind.

Fig. 4 zeigt in stark vereinfachter Form ein verkehrstelematisches System, bei welchem ein Austausch und eine Nutzung von erfindungsgemäß codierten Ortsinformationen stattfindet. In einer zentralen Einrichtung 1 werden Informationen, die von einem verkehrstelematischen Dienst 11 abgegeben und empfangen werden, über einen Codierer/Decodierer 12 und eine Sende/Empfangseinrichtung 13 einer Datenfernübertragungseinrichtung 4 zugeführt bzw. entnommen. Zur Codierung bzw. Decodierung der in den Informationen enthaltenen Ortsangaben ist eine Ortsdatenbank 14 erforderlich - auch Location Table = LT genannt. Derartige Ortsdatenbanken sind beispielsweise für das oben erwähnte TMC-System bekannt und erhalten jeweils zu einem Ortscode Angaben über die Art des Ortes, über Nachbarorteauf der jeweiligen Straße und die Position des Ortes in Form eines Koordinatenpaares. Als Datenfernübertragungseinrichtung 4 dient beispielsweise ein zellulares Funknetz.

Die zentrale Einrichtung 1 kann über die Datenfernübertragungseinrichtung 4 mit vielen Fahrzeugeinrichtungen Informationen austauschen, wovon in Fig. 4 lediglich Fahrzeugeinrichtungen 2, 3 dargestellt sind, die jeweils Einrichtungen 21, 31 für die verkehrstelematischen Dienste, Codierer/Decodierer 22, 32, Ortsdatenbanken 24, 34 und Sende/Empfangs-Einrichtungen 23, 33 enthalten. Trotz dieser in Fig. 4 identisch dargestellten Struktur können die Fahrzeugeinrichtungen recht verschieden voneinander sein. So können beispielsweise die verkehrstelematischen Dienste 21, 31 erhebliche Unterschiede aufweisen, wobei auch die Ortsdatenbanken 24, 34 verschieden sein können, beispielsweise einen verschieden hohen Detaillierungsgrad aufweisen können.

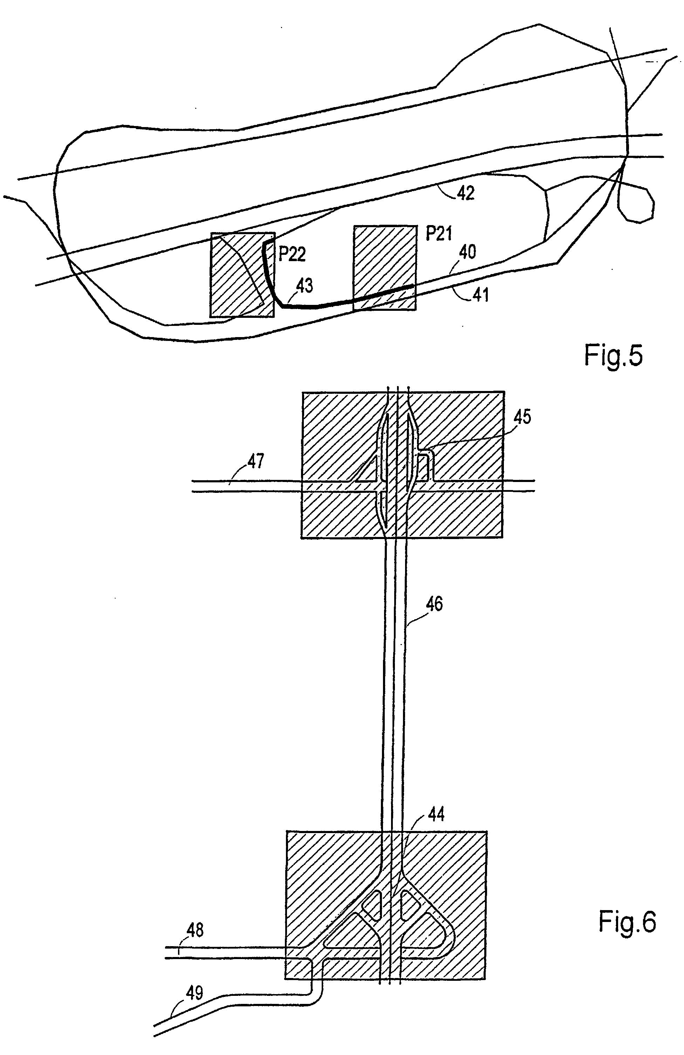

Fig. 5 zeigt ein weiteres Beispiel, bei dem ein Fahrtziel, nämlich ein bestimmter Parkplatz im Ankunftsbereich des Frankfurter Flughafens, Terminal 1, angefahren werden soll. Am Frankfurter Flughafen sind die Bereiche Abflug und Ankunft untereinander angeordnet. Die entsprechenden Fahrspuren liegen übereinander. Sie unterscheiden sich jedoch bezüglich der jeweiligen Anfahrt. In Fig. 5 sind die an sich übereinanderliegenden Straßen für Abflug und Ankunft 41, 42 nebeneinanderliegend dargestellt. Das Fahrtziel P21 liegt an der geografischen Position ungefähr bei 8°34'2,8" östlicher Länge und 50°3'8,7" nördlicher Breite. Nach einer vereinbarten Abweichung von ±3" ist es nicht eindeutig, ob der Ankunfts- oder der Abflugbereich des Flughafens angefahren werden soll. Der entsprechende Toleranzbereich von P21 ist in Fig. 5 schraffiert dargestellt. Es wird daher noch ein Hilfspunkt P22 benötigt. Die von der Anfahrt des Abflugbereichs abweichende Anfahrt 43 zum Parkplatz verläuft etwa über den Punkt 3°34'7,2" und 50°3'3,1" und ist in Fig. 5 hervorgehoben dargestellt. Der Toleranzbereich des Punktes P22 ist schraffiert.

Zur Codierung des Punktes P21 und damit des bestimmten Parkplatzes wird daher folgendes gesendet:
Vereinbarung:
   I. Einheit: Grad, Winkelminute, Zehntel-Winkelsekunde
   II. Toleranz: plus/minus drei Winkelsekunden
   III. Typ: Punkt, Straßennetz
   IV. Lage: Zweiter Punkt
   V. Anzahl Koordinatenpaare: zwei
Koordinaten:
   I. 8°34'7,2"E; 50°3'8,1"N
   II. 8°34'20,8"E; 50°3'8,7"N

Über die Vereinbarung, daß über P22 das punktförmige Fahrtziel P21 mit einer Abweichung von ±3" definiert wird, kann Eindeutigkeit über das Fahrtziel in der digitalen Karte des Empfängers hergestellt werden. Obwohl die übertragenen Koordinaten nicht auf Straßen der Karte des Empfängers liegen, hat nur die Ankunft eine Beziehung zwischen P21 und P22. Das Fahrtziel ist somit eindeutig codiert. Zur Reduzierung der zu übertragenden Datenmenge können für die zweiten und gegebenenfalls für weitere Koordinatenpaare die jeweilige Differenz zum ersten Koordinatenpaar (Delta-Koordinaten) übertragen werden, was in dem Beispiel folgenden Koordinatenteil ergibt:
I. 8°34'7,2"E; 50°3'8,1"N
II. +1,5 2"; +0,6"

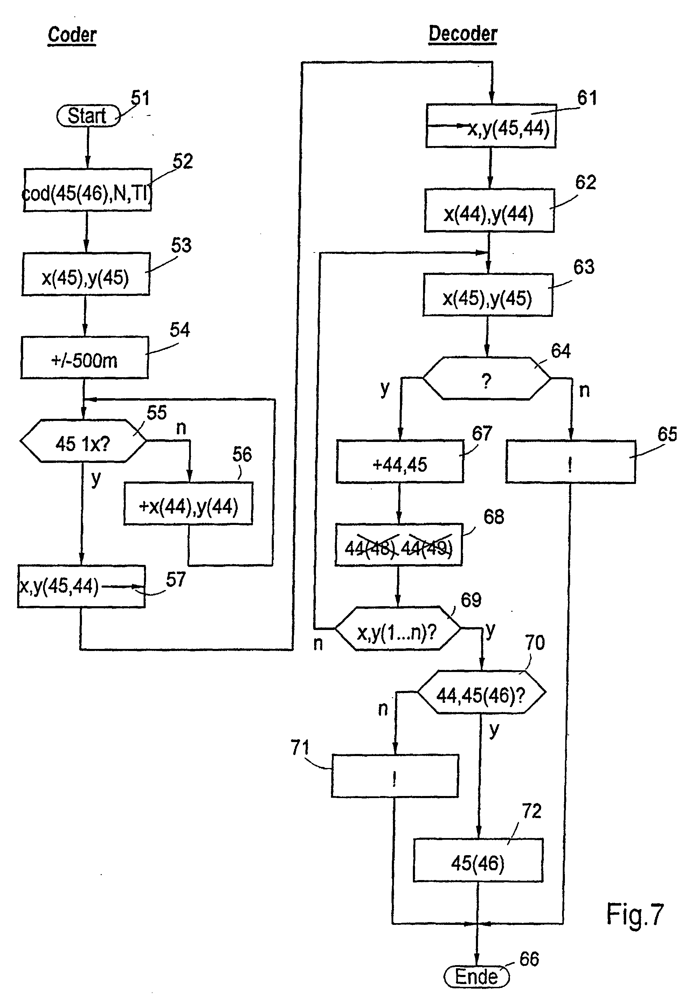

Bei einem weiteren in Fig. 6 dargestellten Beispiel soll eine Anschlußstelle 45 einer Autobahn 46 für eine Verkehrsmeldung codiert werden. Die zur Decodierung der Verkehrsmeldung liegenden Ortsdatenbanken beinhalten jedoch außer dem Ort (Anschlußstelle 45) als Punkt auf der Autobahn 46 einen Punkt mit gleichen oder mindestens in den Toleranzbereich fallenden Koordinaten auf einer Straße 47. Damit jedoch die Anschlußstelle als Punkt auf der Autobahn 46 eindeutig codiert wird, wird ein weiterer Punkt, nämlich die benachbarte Anschlußstelle 44 als Koordinatenpaar übertragen. In der zur Decodierung dienenden Ortsdatenbank ist diese Anschlußstelle jedoch auch im Zusammenhang mit zwei weiteren Straßen 48, 49 aufgeführt. Da diese jedoch keinen Zusammenhang mit dem Punkt 45 aufweisen, kann eine Eindeutigkeit im Empfänger hergestellt werden, was im folgenden im Zusammnehang mit Fig. 7 näher erläutert wird.

Fig. 7 stellt den Ablauf der Codierung und der Decodierung der Anschlußstelle 45 (Fig. 6) dar. Dieser Ablauf entspricht Programmen von Prozessoren im Sender und Empfänger. Nach einem Start bei 51 wird bei 52 der Auftrag angenommen, nämlich "codiere die Anschlußstelle 45, Fahrtrichtung Nord (N) für Verkehrsinformationen (IT)". Bei 53 werden die geografischen Koordinaten x(45), y(45) der Anschlußstelle 45 aus einer digitalen Karte oder einem anderen geeigneten Speicher ausgelesen. Bei 54 wird die für Verkehrsinformationen im Zusammenhang mit Autobahnen geeignete Toleranz festgelegt, beispielsweise ±500 m.

Bei 55 wird das Programm in Abhängigkeit davon verzweigt, ob Eindeutigkeit für die Angabe der Koordinaten für die Anschlußstelle 45 vorliegt. Werden in der Ortsdatenbank des Coders mehr als ein Ort mit diesen Koordinaten gefunden - in diesem Fall auch der gleiche Ort auf der Straße 47 - verzweigt sich das Programm in Richtung auf den Programmteil 56, in welchem die Koordinaten des auf der Autobahn 46 liegenden vorherigen Ortes, nämlich der Anschlußstelle 44, hinzugefügt werden. Mit beiden Koordinatenpaaren wird die Prüfung bei 55 wiederholt. Sofern dann Eindeutigkeit gegeben ist, werden bei 57 die Koordinaten x(45), y(45) und x(44), y(44) zum Empfänger bzw. Decoder übertragen. Dort werden die Koordinaten bei 61 empfangen, worauf bei 62 die Koordinaten des ersten Punktes auf Vorhandensein in der Ortsdatenbank geprüft werden und eine Liste der möglichen Kandidaten, nämlich die Anschlußstelle 44 jeweils auf den Straßen 46, 48, 49 erstellt.

Danach wird bei 63 der nächste Punkt in entsprechender Weise geprüft und bei 64 entschieden, ob die Anschlußstelle 45 auf einer oder mehreren Listen als Nachfolger aufgeführt ist. Ist die Anschlußstelle 45 auf keiner Liste als Nachfolger aufgeführt, so wird bei 65 ein Fehler festgestellt. Es kann keine Decodierung erfolgen, worauf das Programm bei 66 beendet wird.

Anderenfalls wird die Anschlußstelle 45 nach der Anschlußstelle 44 auf der Liste hinzugefügt (Programmteil 67). Bei 68 werden diejenigen Listeneinträge, bei denen der Punkt nicht enthalten ist, nämlich der Ort 44 auf den Straßen 48, 49, gelöscht. Bei 69 wird das Programm in Abhängigkeit davon verzweigt, ob alle erhaltenen Koordinatenpaare geprüft wurden. Sind welche noch nicht geprüft, wird die Prüfung bei 63 wiederholt. Sind alle geprüft, wird bei 70 nochmals die Eindeutigkeit geprüft, ob nämlich die Liste nur noch eine Koordinatenkette auf einer Straße enthält.

Ist dieses nicht der Fall, wird bei 71 festgestellt, daß der Punkt nicht eindeutig decodiert werden konnte und das Programm bei 66 beendet. Liegt jedoch bei 70 eine Eindeutigkeit vor, wird bei 72 das Ergebnis, nämlich die Anschlußstelle 45 auf der Autobahn 46, in geeigneter Weise festgehalten, insbesondere in einem Speicher vorübergehend abgelegt, und je nach Anwendung im einzelnen auch angezeigt oder einer Sprachausgabeeinrichtung zugeführt.

## Patentansprüche

1. Verfahren zur Codierung oder Decodierung von Orten in einem Verkehrswegnetz, zu denen Informationen von jeweils einem Sender an einem Empfänger übertragen werden, **dadurch gekennzeichnet,**
- **dass** der Code aus einem Vereinbarungsteil und je codiertem Ort aus einem Koordinatenteil besteht,
- **dass** der Koordinatenteil mehrere Koordinatenpaare enthält, wobei ein Koordinatenpaar die senderseitig gespeicherten Koordinaten des codierten Ortes und mindestens ein weiteres Koordinatenpaar mindestens einen Hilfspunkt darstellt, und
- **dass** der Vereinbarungsteil mindestens die Anzahl dieser im Koordinatenteil enthaltenen Koordinatenpaare, die Lage des Koordinatenpaares des codierten Ortes im Koordinatenteil und eine Angabe zu dem Typ des codierten Ortes enthält.

2. Verfahren nach Anspruch 1, **dadurch gekennzeichnet, dass** der Vereinbarungsteil ferner Angaben zur Art der Codierung und zu Toleranzen der Koordinatenpaare enthält.

3. Verfahren nach einem der Ansprüche 1 oder 2, **dadurch gekennzeichnet, dass** der Vereinbarungsteil mindestens teilweise dauerhaft im Sender und im Empfänger gespeichert ist.

4. Verfahren nach einem der vorhergehenden Ansprüche, **dadurch gekennzeichnet, dass** der Vereinbarungsteil mindestens teilweise bei der Aufnahme einer Kommunikation zwischen Sender und Empfänger übertragen wird.

5. Verfahren nach einem der vorhergehenden Ansprüche, **dadurch gekennzeichnet, dass** der Vereinbarungsteil mindestens teilweise unmittelbar im Zusammenhang mit dem Koordinatenteil übertragen und im Empfänger vorübergehend gespeichert wird.

6. Verfahren nach einem der vorhergehenden Ansprüche, **dadurch gekennzeichnet, dass** vom Sender derart viele Koordinatenpare in den Koordinatenteil aufgenommen werden, dass jeder zur Decodierung eingerichtete Empfänger den jeweils codierten Ort eindeutig identifizieren kann.

7. Verfahren nach Anspruch 5, **dadurch gekennzeichnet, dass** die in einem empfangenen Koordinatenteil enthaltenen Koordinaten sich auf Punkte beziehen, die im Empfänger in einer gemeinsamen Beziehung stehen.

8. Verfahren nach einem Anspruch 7, **dadurch gekennzeichnet, dass** im Empfänger innerhalb des Toleranzbereiches mehrere Punkte zugeordnet werden können und derjenige Punkt ausgewählt wird, der die nächste Beziehung zum vorangehenden und zum darauffolgenden Hilfspunkt hat.

9. Verfahren nach einem der vorhergehenden Ansprüche, **dadurch gekennzeichnet, dass** im Koordinatenteil ein Koordinatenpaar als absolute Größe und die weiteren Koordinatenpaare als Abweichungen zu dem einen Koordinatenpaar enthalten sind.

10. Verfahren zur Decodierung von Orten in einem Verkehrswegenetz, die nach einem der vorhergehenden Ansprüche übertragen wurden, **dadurch gekennzeichnet,**
- **dass** in einer Ortsdatenbank, welche die Koordinaten, die Lagen an jeweils einem Verkehrsweg und weitere Informationen von Orten enthält, Orte ermittelt werden, die innerhalb der Toleranzbereiche der empfangenen Koordinatenpaare liegen,
- **dass** aus den ermittelten Orten diejenigen ausgewählt werden, die an einem gemeinsamen Verkehrsweg liegen, und
- **dass** aus den ausgewählten Orten derjenigen als decodiert bestimmt wird, der in dem Toleranzbereich des bestimmten Koordinatenpaares liegt.

## Claims

1. Method for coding or decoding locations in a transport route network to which information is transmitted from, in each case, one transmitter to a receiver, **characterized**
- **in that** the code is composed of an agreement part and of a co-ordinate part per coded location,
- **in that** the co-ordinate part contains a plurality of co-ordinate pairs, one co-ordinate pair representing the coordinates of the coded location which are stored at the transmitter end and at least one further co-ordinate pair representing at least one auxiliary point, and
- **in that** the agreement part contains at least the number of these co-ordinate pairs which are contained in the co-ordinate part, the position of the co-ordinate pair of the coded location in the co-ordinate part and an indication of the type of the coded location.

2. Method according to Claim 1, **characterized in that** the agreement part also contains information on the type of coding and on tolerances of the co-ordinate pairs.

3. Method according to one of Claims 1 or 2, **characterized in that** the agreement part is at least in some cases permanently stored in the transmitter and in the receiver.

4. Method according to one of the preceding claims, **characterized in that** the agreement part is at least in some cases transmitted between the transmitter and receiver when communication is started.

5. Method according to one of the preceding claims, **characterized in that** the agreement part is at least in some cases transmitted directly together with the co-ordinate part and temporarily stored in the receiver.

6. Method according to one of the preceding claims, **characterized in that** such a large number of co-ordinate pairs are incorporated into the co-ordinate part by the transmitter that each receiver which is set up for decoding can unambiguously identify the respectively coded location.

7. Method according to Claim 5, **characterized in that** the coordinates which are contained in a received co-ordinate part relate to points which have a common relationship in the receiver.

8. Method according to Claim 7, **characterized in that**, in the receiver, a plurality of points can be assigned within the tolerance range and that point which has the closest relationship to the preceding auxiliary point and to the subsequent auxiliary point is selected.

9. Method according to one of the preceding claims, **characterized in that** the co-ordinate part contains a co-ordinate pair as absolute variable and the further co-ordinate pairs as deviations from the first co-ordinate pair.

10. Method for decoding locations in a transport route network which have been transmitted according to one of the preceding claims, **characterized**
- **in that**, in a location database which contains the coordinates, the positions on one traffic route in each case and further information on locations, locations are determined which lie within the tolerances ranges of the received co-ordinate pairs,
- **in that**, from the locations determined, those locations are selected which lie on a common traffic route, and
- **in that**, from the selected locations, that location which lies in the tolerance range of the specific co-ordinate pair is determined as being decoded.

## Revendications

1. Procédé de codage et de décodage de lieux dans un réseau de circulation routière avec transmission d'informations de l'émetteur vers le récepteur
**caractérisé en ce que**
- le code se compose d'une partie convenue et suivant le lieu codé également d'une partie de coordonnées,
- la partie de coordonnées contient plusieurs paires de coordonnées, une paire de coordonnées représentant les coordonnées enregistrées du côté de l'émetteur pour l'emplacement codé et au moins une autre paire de coordonnées représentant un point auxiliaire, et
- la partie convenue contient au moins le nombre des paires des coordonnées contenues dans la partie de coordonnées, la position de la paire de coordonnées du lieu codé dans la partie de coordonnées et une indication du type de lieu codé.

2. Procédé selon la revendication 1,
**caractérisé en ce que**
la partie convenue contient en outre des indications sur la nature du codage et une tolérance des paires de coordonnées.

3. Procédé selon l'une des revendications 1 ou 2,
**caractérisé en ce que**
la partie convenue est enregistrée au moins en partie de façon permanente dans l'émetteur et dans le récepteur.

4. Procédé selon l'une des revendications précédentes,
**caractérisé en ce que**
la partie convenue est transmise au moins partiellement lors de l'établissement d'une communication entre l'émetteur et le récepteur.

5. Procédé selon l'une des revendications précédentes,
**caractérisé en ce que**
la partie convenue est transmise au moins en partie, directement en liaison avec la partie de coordonnées et est enregistrée provisoirement dans le récepteur.

6. Procédé selon l'une des revendications précédentes,
**caractérisé en ce que**
l'émetteur reçoit autant de paires de coordonnées dans la partie de coordonnées que chaque récepteur conçu pour le décodage, puisse identifier sans équivoque le lieu codé.

7. Procédé selon la revendication 5,
**caractérisé en ce que**
les coordonnées contenues dans la partie de coordonnées reçues concernent des points qui ont une relation commune dans le récepteur.

8. Procédé selon la revendication 7,
**caractérisé en ce que**
dans le récepteur, à l'intérieur de la plage de tolérance on peut avoir plusieurs points et on sélectionne le point qui présente la relation la plus proche avec le point auxiliaire précédent et le point auxiliaire suivant.

9. Procédé selon l'une des revendications précédentes,
**caractérisé en ce que**
dans la partie de coordonnées on enregistre une paire de coordonnées comme grandeur absolue et l'autre paire de coordonnées comme déviation par rapport à une paire de coordonnées.

10. Procédé de décodage de lieux dans un réseau de circulation routière transmis suivant les revendications précédentes,
**caractérisé en ce que**
dans une banque de données de lieux qui contient les coordonnées, les positions au niveau de chaque chemin de circulation et d'autres informations de lieux on détermine des lieux situés à l'intérieur de la plage de tolérance de la paire de coordonnées reçue,
- à partir des lieux obtenus on sélectionne ceux qui sont situés sur un chemin de circulation commun, et
- à partir des lieux sélectionnés on définit comme décodé celui qui se situe dans la plage de tolérance de la paire de coordonnées déterminée.
